# EUROPEAN PATENT SPECIFICATION

(11) **EP 2 675 112 B1**
(45) Date of publication and mention of the grant of the patent: **24.12.2014**
(21) Application number: 12171766.4
(22) Date of filing: 13.06.2012
(51) Int. Cl.: H04L 12/28, H02J 3/12, G06F 1/32

(54) **Method and energy management unit for load scheduling in building automation**
Verfahren und Energieverwaltungseinheit zur Lastplanung bei der Gebäudeautomatisierung
Procédé et unité de gestion d'énergie pour charger la programmation d'automatisation de bâtiment

(43) Date of publication of application: 18.12.2013
(73) Proprietor: ABB AG, 68309 Mannheim (DE)
(72) Inventor: Hansen, Ewa, 722 23 Västerås (SE); Bag, Gargi, 723 44 Västerås (SE); Stoll, Pia, 72346 Västerås (SE); Rossebø, Judith, N-0852 Oslo (NO); Lennvall, Tomas, 722 21 Västerås (SE); Rizvanovic, Larisa, 724 71 Västerås (SE)

(56) References cited:
- WO-A1-2009/151416
- WO-A2-2011/083967
- GB-A- 2 450 357
- US-A1- 2012 065 791
- US-A1- 2012 083 934

## Description

### TECHNICAL FIELD

The present disclosure generally relates to building automation and in particular to a method and an energy management unit for scheduling of loads in a building automation system.

### BACKGROUND

Energy consumption of the residential building sector and the commercial building sector forms a non-negligible portion of all sectors' energy consumption. To that end, the energy costs of and the environmental impact provided by buildings are substantial. For the purpose of reducing energy costs, demand response programs for large-scale consumers such as industrial plants or commercial buildings are today in existence.

The possibilities for a user of a building automation system to change settings/parameters of the building automation system are limited to set preferences and actions, like setting thermostats or setting up a weekly scheme for blinds, based on information from sensors connected to the building automation system.

The publication "Wireless Sensor Networks for Cost-Efficient Residential Energy Management in the Smart Grid" by Erol-Kantarci et al., published in IEEE Transactions on smart grid, vol. 2, no. 2, June 2011, evaluates the performance of an in-home energy management system (iHEM) application. The performance of iHEM is compared with an optimization-based residential energy management scheme whose object is to minimize the energy expenses of the consumers by scheduling appliances to less expensive hours according to time-of-use tariffs. The possibility to control energy costs and the environmental impact of energy consumption is however still limited. There is hence a need to improve existing solutions.

According to the WO 2011/083 967 A2 a network system comprises: a utility network including at least an energy generation component; a home network including an energy consumption component which consumes energy generated by the energy generation component, and which has at least one control component for driving the energy consumption component; and a communication module for communication between the energy consumption component and an external component of the utility network or of the home network. The communication module is located on the path which transfers power applied for driving the energy consumption component to the control component. The network system effectively manages energy sources.

### SUMMARY

In view of the above, a general object of the present disclosure is to provide a method and an energy management unit for scheduling the operation of a load in a building automation system based on the environmental impact provided by the load.

Hence, according to a first aspect of the present disclosure there is provided a method for scheduling the operation of at least one load in a building automation system, wherein the method comprises: providing carbon dioxide emission control parameters based on carbon dioxide emission statistics; receiving user selection data in which the at least one load is associated with at least one of the carbon dioxide emission control parameters, and which user selection data comprises a user-selected constraint of a level of importance of limiting the operation of the at least one load to the selected at least one carbon dioxide emission control parameter; and determining a schedule according to which the at least one load is allowed to operate for a time period based on the user selection data and on carbon dioxide emission data concerning expected carbon dioxide emission during the time period.

By determining a schedule of operating loads based on user-selected carbon dioxide emission preferences a beneficial schedule, with regards to both users' preference of when to utilise loads and the magnitude of the environmental impact provided by the loads, may be determined.

One embodiment comprises receiving the carbon dioxide emission data for the time period from a service provider prior to determining the schedule.

According to one embodiment each carbon dioxide emission control parameter is a carbon dioxide emission level.

One embodiment comprises, prior to providing the carbon dioxide emission level data comprising a plurality of carbon dioxide emission levels, generating the plurality of carbon dioxide emission levels in such a way that a highest carbon dioxide emission level in winter is equal to the highest carbon dioxide emission level in summer.

One embodiment comprises providing energy cost level data of a plurality of energy cost levels that are based on energy cost statistics.

One embodiment comprises receiving user selection data in which the at least one load is associated with at least one of the plurality of energy cost levels, and which user selection data comprises a user-selected constraint of a level of importance of limiting the operation of the at least one load to the selected at least one energy cost level.

According to one embodiment the determining of the schedule is further based on energy cost data concerning expected energy costs during the time period.

One embodiment comprises receiving the energy cost data for the time period from a service provider prior to determining the schedule.

One embodiment comprises providing starting time data to the at least one load based on the schedule.

According to a second aspect of the present disclosure there is provided a computer program product comprising computer-executable components for causing a device to perform the steps of the first aspect when the computer-executable components are run on a processor included in the device.

According to a third aspect of the present disclosure there is provided an energy management unit for scheduling the operation of at least one load in a building automation system, wherein the energy management unit comprises: an output unit arranged to provide carbon dioxide emission level data of a plurality of carbon dioxide emission levels based on carbon dioxide emission statistics; an input unit arranged to receive user selection data in which the at least one load is associated with at least one of the plurality of carbon dioxide emission levels, and which user selection data comprises a user-selected constraint of a level of importance of limiting the operation of the at least one load to the selected at least one carbon dioxide emission level; and a processor arranged to determine a schedule according to which the at least one load is allowed to operate for a time period based on the user selection data and on carbon dioxide emission data concerning expected carbon dioxide emission during the time period.

According to one embodiment each carbon dioxide emission control parameter is a carbon dioxide emission level.

According to one embodiment the output unit is arranged to provide energy cost level data of a plurality of energy cost levels based on energy cost statistics.

According to one embodiment the input unit is arranged to receive user selection data in which the at least one load is associated with at least one of the plurality of energy cost levels, and which user selection data comprises a user-selected constraint of a level of importance of limiting the operation of the at least one load to the selected at least one energy cost level.

According to one embodiment the processor is arranged to determine the schedule further based on energy cost data concerning expected energy costs during the time period.

According to one embodiment the processor is arranged to provide starting time data to the at least one load based on the schedule.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise. Moreover, any step in a method need not necessarily have to be carried out in the presented order, unless explicitly stated otherwise.

### BRIEF DESCRIPTION OF THE DRAWINGS

The specific embodiments of the inventive concept will now be described, by way of example, with reference to the accompanying drawings, in which:
Fig. 1 is a schematic diagram of an energy management unit;
Fig. 2 depicts a building automation system including the energy management unit in Fig. 1;
Figs. 3a-c are schematic view of a display of a user interface for scheduling loads by means of the energy management unit in Fig. 1; and
Fig. 4 is a flowchart of a method for scheduling the operation of a load in a building automation system.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

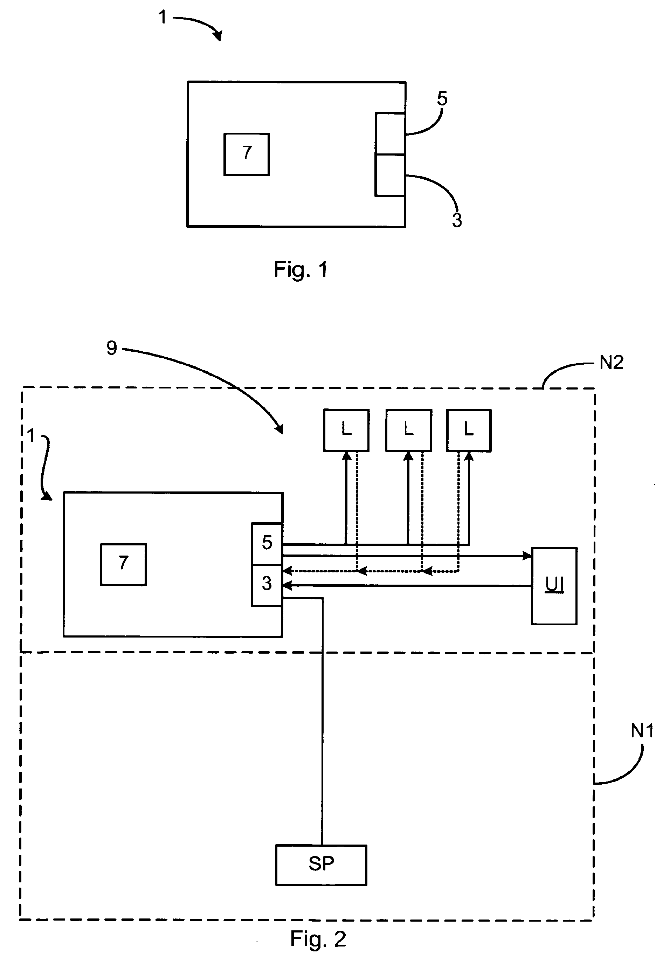

Fig. 1 is an example of an energy management unit 1 for use in a building automation system for load scheduling/control. A building in this context may be a commercial building such as an office building, a sports arena, an airport, or a factory. Building may alternatively refer to a residential home, wherein the building automation system is a home automation system. Examples of building automation systems for the purpose of this disclosure are the Building Automation and Control System (BACS) and the Home and Building Electronic System (HBES).

As defined herein a load is an electricity consuming entity that may be connected to the energy management unit 1, e.g. for scheduling and controlling of when the load should be operated. A load may for example be a lighting system, a hybrid or electric vehicle, heating, ventilation and air conditioning (HVAC), a thermostat or home appliances such as a washing machine, a tumble dryer, or a dishwasher.

Returning now to Fig. 1, the energy management unit 1 comprises an input unit 3, an output unit 5 and a processor operatively connected to the input unit 3 and the output unit 5.

The energy management unit 1 may act as a network node between a first communications network that is external to the building automation system in which the energy management unit 1 may be arranged, and a second communications network which is internal to the building(s) with which the energy management unit 1 is associated. The energy management unit 1 may hence be seen as a gateway acting as an interface between the first communications network and the second communications network.

The energy management unit 1 may be configured by means of a user interface UI, as shown in Fig. 2. The user interface UI may be integrated with the energy management unit 1, or the user interface UI may be separate from the energy management unit 1. The user interface UI may for example be provided in the form of an application in a smart phone, a tablet computer, or it may be accessible through a web browser.

The output unit 5 is according to one embodiment arranged, based on carbon dioxide emission statistics stored in the energy management unit 1, to provide carbon dioxide emission control parameters to the user interface UI. In the following, the carbon dioxide emission control parameters will be exemplified by carbon dioxide emission level data. According to the examples given herein, each carbon dioxide emission control parameter corresponds to a carbon dioxide emission level.

The output unit 5 is according to one embodiment arranged, based on energy cost statistics stored in the energy management unit 1, to provide energy cost level data of a plurality of energy cost levels to the user interface UI.

The input unit 3 is arranged to receive user selection data concerning energy management unit configurations, based on at least one of the carbon dioxide emission level data and energy cost level data.

The input unit 3 may according to one variation be arranged to receive data from a service provider of carbon dioxide emission data, and energy cost data concerning expected carbon dioxide emission and energy cost, respectively, of a time period.

The input unit 3 may according to one embodiment be arranged to receive starting time requests from the loads which the energy management unit 1 is arranged to schedule operating times for.

The processor 7 is arranged to process user selection data. In embodiments where at least one of carbon dioxide emission data and energy cost data is received from a service provider, the processor is also arranged to process such data. Based on the user selection data, and at least one of the carbon dioxide emission data and energy cost data the processor 7 is arranged to determine a schedule that provides optimal operation of the loads according to user preferences. Starting times of the loads according to the determined schedule can be provided via the output unit 5 to the loads.

Fig. 2 shows a building automation system 9 comprising an energy management unit 1, a user interface UI arranged to be in communication with the energy management unit 1, and a plurality of loads L arranged to be in communication with the energy management unit 1. The energy management unit 1 is arranged to communicate with e.g. a service provider SP via a first communications network N1. The energy management unit 1, the user interface UI and the plurality of loads L form part of a second communications network N2 that is internal to the building automation system 9 in the sense that it is a local network. Each of the first communications network N1 and the second communications network N2 may be a wireless network or a wired network. Hence, the energy management unit 1 may be arranged to communicate wirelessly, by means of wires, or a combination of wireless and wired communication. Examples of suitable wired communications standards are IEEE P1901, ITU-T G.Hn, and ANSI/CEA 709.2, and examples of suitable wireless communications standards are Zigbee, Wi-Fi, and Z-wave.

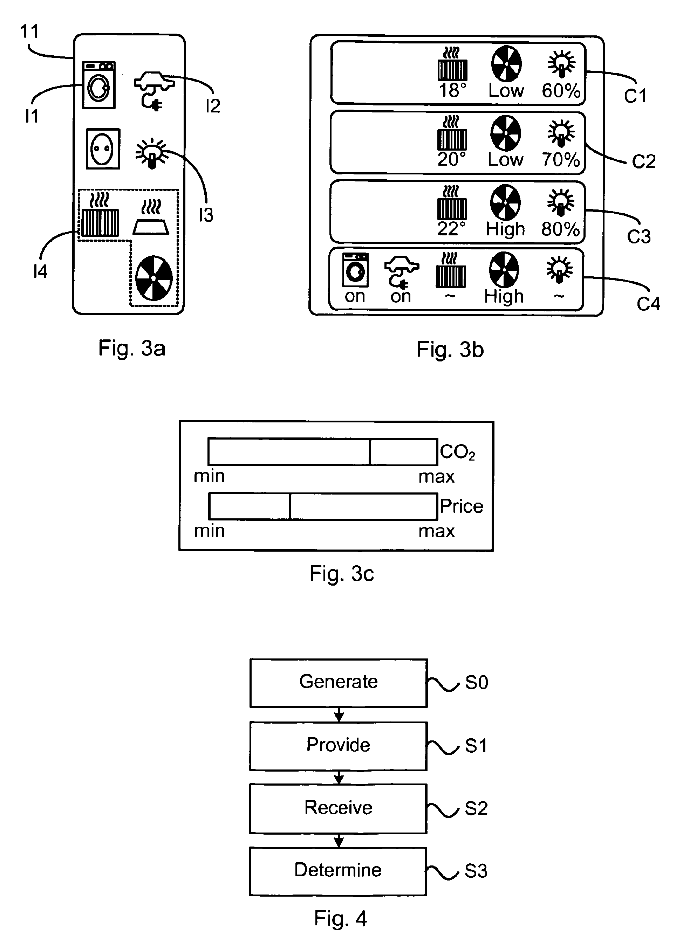

The operation of the energy management unit 1, including the determining of a schedule of loads, will now be described in more detail with reference to Figs. 3a-c and Fig. 4.

Typically, upon instalment of the energy management unit 1 in a building automation system, the energy management unit 1 is provided with carbon dioxide emission level data comprising a plurality of carbon dioxide emission levels. The carbon dioxide emission levels are generated based on carbon dioxide emission statistics that may be stored in the energy management unit. The carbon dioxide emission statistics can be stored in the energy management unit 1 e.g. during manufacturing, or it may be received by the energy management unit 1 via for example the first communications network N1 upon instalment in a building automation system.

According to one embodiment, the carbon dioxide emission levels are generated in a step So in such a way that a highest carbon dioxide emission level in winter is equal to the highest carbon dioxide emission level in summer. According to one embodiment the number of carbon dioxide emission levels may be selected by a user.

Optionally the energy management unit may further be provided with energy cost level data comprising a plurality of energy cost levels. The energy cost levels are generated based on energy cost statistics that may be stored in the energy management unit. The energy cost statistics can be stored in the energy management unit 1 e.g. during manufacturing, or it may be received by the energy management unit 1 via for example the first communications network N1 upon instalment in a building automation system.

According to one embodiment the plurality of energy cost levels are generated in such a way that a highest energy cost level in winter is equal to the highest energy cost level in summer. According to one embodiment the number of energy cost levels may be selected by a user.

After the initial configuration of the energy management unit 1 as described above, the scheduling of operation of one or more loads will now be described in more detail.

In a step S1 the carbon dioxide emission level data of a plurality of carbon dioxide emission levels are provided by the energy storage unit 1 to the user interface UI. Fig. 3a shows an example of user interface graphics 11 presented to a user by means of the user interface UI. Although the example is provided in a home automation context, it is to be noted that similar principles also apply for commercial building automation. The user interface graphics 11 comprises icons I1-I₄ of home appliances, i.e. loads, such as a washing machine in icon I1, a charger for an electric vehicle in icon I2, a lighting system in icon I3 and HVAC in icon I4. The user may select any of the icons presented in the user interface graphics 11 and associate them, and thus the underlying loads, with any of the carbon dioxide emission levels C1-C4 in Fig. 3b displayed on the user interface UI. The carbon dioxide emission levels may for example be displayed according to the amount of emission, e.g. the highest emission level C1 on top, with the lower levels C2-C4 being presented in decreasing order. The user may for example drag those icons I1-I4 which he/she selects and would like to schedule, to the preferred carbon dioxide emission levels to thereby associate the loads with at least one carbon dioxide emission level C1-C4. The user may also be able to configure each load at each carbon dioxide emission level via the user interface UI. The user may for example be able to configure at which intensity a lighting system should be allowed operate at a selected carbon dioxide emission level.

The user interface UI is further arranged to allow a user to configure a constraint concerning a level of importance of limiting the operation of the at least one load to the selected at least one carbon dioxide emission level, as shown in Fig. 3c. A user is thus able to select a preferred importance of restricting the scheduling of the loads to the selected carbon dioxide emission level(s).

In embodiments where the scheduling of operation of the loads is further based on the energy costs, the presentation of energy cost levels on the user interface UI and associating of loads with energy cost levels is similar to that described above for carbon dioxide emission levels. To that end, the user may select any of the icons presented in the user interface graphics 11 and associate them, and thus the underlying loads, with the energy cost levels displayed on the user interface UI. The energy cost levels may for example be displayed according to the cost amount, e.g. the highest energy cost level on top, with the lower levels being presented in decreasing order. The user may for example drag those icons which he/she selects, to the preferred energy cost levels to thereby associate the loads with at least one energy cost level. The user may also be able to configure each load at each energy cost level via the user interface UI. A user may for example be able to configure at which intensity a lighting system should be allowed operate at a selected energy cost level.

The user interface UI is further arranged to allow a user to configure a constraint concerning a level of importance of limiting the operation of the at least one load to the selected at least one energy cost level, as shown in Fig. 3c. A user is thus able to select a preferred importance of restricting the scheduling of the loads to the selected energy cost level(s).

Data concerning the selection of at least one load and the association of the at least one load with at least one carbon dioxide emission level is provided to the energy management unit 1 in the form of user selection data. Thus, in a step S2 the energy management unit receives the user selection data, which user selection data also comprises a user-selected constraint of a level of importance of limiting the operation of the at least one load to the selected at least one carbon dioxide emission level.

In embodiments where energy cost levels are involved the energy management unit 1 also receives user selection data in which the at least one load is associated with at least one of the plurality of energy cost levels, and which user selection data comprises a user-selected constraint of a level of importance of limiting the operation of the at least one load to the selected at least one energy cost level.

In a step S3 a schedule according to which the at least one load is allowed to operate for a time period is determined based on the user selection data and on carbon dioxide emission data concerning expected carbon dioxide emission during the time period. In embodiments involving energy cost data, the determining of the schedule is further based on energy cost data concerning expected energy costs during the time period.

The determining is based on an optimisation of a scheduling function based on the carbon dioxide emission levels which are associated with at least one load and the user-selected constraint concerning carbon dioxide emission. For embodiments involving energy costs the optimization is further based on the energy cost levels which are associated with at last one load and the user-selected constraint concerning energy costs.

An example of a suitable time period may for example be 24 hours. The schedule may comprise a plurality of time slots which together form the time period. A time slot may for example be one hour. For each time slot, the loads are scheduled to run at a specific carbon dioxide emission level, and in variations involving energy costs, also at a specific energy cost level.

The carbon dioxide emission data for the time period may for example be received from a service provider, e.g. a retailer or the utility, prior to determining the schedule. Alternatively, the carbon dioxide emission data may be stored in the energy management unit 1 based on for example country specific statistics concerning carbon dioxide emission. To this end, the carbon dioxide emission data may be dynamic if delivered by a service provider or static in case country specific statistics are utilised.

The energy cost data for the time period may for example be received from a service provider, e.g. a retailer or the utility, prior to determining the schedule. Alternatively, the energy cost data may be stored in the energy management unit 1 based on for example country specific statistics concerning energy costs. To this end, the energy cost data may be dynamic if delivered by a service provider or static in case country specific statistics are utilised.

When the energy management unit 1 receives requests of starting times from the loads, the energy management unit 1 can in a step S3 provide starting time data to the loads based on the determined schedule to thereby obtain operation according to the user's preferences concerning environmental impact and in some variations also energy costs.

When the schedule has been determined, it is provided by the energy management unit 1 to the user interface UI to present the possible time slots at which the load or loads may run for the time period. A user may select a certain load, wherein the scheduling of that load will be displayed. A user may also by means of interaction with the user interface UI generate a re-scheduling of the selected load. A user input of re-scheduling one or more loads can thereby be received by the energy management unit 1, wherein step S3 of determining is repeated based on the user input so as to determine a re-scheduling of the times at which the selected load may run.

It is envisaged that the methods and energy management unit presented herein may be used in existing grid system as well as in future smart grid systems.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. A method for scheduling the operation of at least one load (L) in a building automation system (9), wherein the method comprises:
providing (S1) carbon dioxide emission control parameters based on carbon dioxide emission statistics,
receiving (S2) user selection data in which the at least one load (L) is associated with at least one of the carbon dioxide emission control parameters, and which user selection data comprises a user-selected constraint of a level of importance of limiting the operation of the at least one load to the selected at least one carbon dioxide emission control parameter, and
determining (S3) a schedule according to which the at least one load (L) is allowed to operate for a time period based on the user selection data and on carbon dioxide emission data concerning expected carbon dioxide emission during the time period.

2. The method as claimed in claim 1, comprising receiving the carbon dioxide emission data for the time period from a service provider prior to determining the schedule.

3. The method as claimed in claim 1 or 2, wherein each carbon dioxide emission control parameter is a carbon dioxide emission level (C1, C2, C3, C4).

4. The method as claimed in claim 3, comprising, prior to providing the carbon dioxide emission control parameters, generating (So) the carbon dioxide emission levels.

5. The method as claimed in any of the preceding claim, comprising providing (S1) energy cost level data of a plurality of energy cost levels that are based on energy cost statistics.

6. The method as claimed in claim 5, comprising receiving (S2) user selection data in which the at least one load is associated with at least one of the plurality of energy cost levels, and which user selection data comprises a user-selected constraint of a level of importance of limiting the operation of the at least one load to the selected at least one energy cost level.

7. The method as claimed in claim 6, wherein the determining of the schedule is further based on energy cost data concerning expected energy costs during the time period.

8. The method as claimed in claim 7, comprising receiving the energy cost data for the time period from a service provider prior to determining the schedule.

9. The method as claimed in any of the preceding claims, comprising providing starting time data to the at least one load based on the schedule.

10. A computer program product comprising computer-executable components for causing a device to perform the steps recited in any one of claims 1-9 when the computer-executable components are run on a processor included in the device.

11. An energy management unit (1) for scheduling the operation of at least one load (L) in a building automation system (9), wherein the energy management unit (1) comprises:
an output unit (5) arranged to provide carbon dioxide emission control parameters based on carbon dioxide emission statistics,
an input unit (3) arranged to receive user selection data in which the at least one load (L) is associated with at least one of the carbon dioxide emission control parameters, and which user selection data comprises a user-selected constraint of a level of importance of limiting the operation of the at least one load (L) to the selected at least one carbon dioxide control parameter, and
a processor (7) arranged to determine a schedule according to which the at least one load (L) is allowed to operate for a time period based on the user selection data and on carbon dioxide emission data concerning expected carbon dioxide emission during the time period.

12. The energy management unit (1) as claimed in claim 11, wherein each carbon dioxide emission control parameter is a carbon dioxide emission level (C1, C2, C3, C4).

13. The energy management unit (1) as claimed in any of claims 11-12, wherein the output unit (5) is arranged to provide energy cost level data of a plurality of energy cost levels based on energy cost statistics.

14. The energy management unit (i) as claimed in claim 13, wherein the input unit (3) is arranged to receive user selection data in which the at least one load is associated with at least one of the plurality of energy cost levels, and which user selection data comprises a user-selected constraint of a level of importance of limiting the operation of the at least one load to the selected at least one energy cost level.

15. The energy management unit (1) as claimed in claim 14, wherein the processor (7) is arranged to determine the schedule further based on energy cost data concerning expected energy costs during the time period.

16. The energy storage unit (1) as claimed in any of claims 11-15, wherein the processor is arranged to provide starting time data to the at least one load based on the schedule.

## Patentansprüche

1. Verfahren für die Zeitvorgabe des Betriebs von mindestens einem Verbraucher (L) in einem Gebäudeautomatisierungssystem (9), wobei das Verfahren Folgendes umfasst:
Bereitstellen (S1) von Kohlendioxidemissionssteuerparametern basierend auf Kohlendioxidemissionsstatistiken,
Empfangen (S2) von Anwenderauswahldaten, in denen der mindestens eine Verbraucher (L) mindestens einem der Kohlendioxidemissiönssteuerparameter zugeordnet ist, wobei diese Anwenderauswahldaten mindestens eine vom Anwender ausgewählte Einschränkung einer Stufe der Wichtigkeit des Beschränkens des Betriebs des mindestens einen Verbrauchers auf den mindestens einen ausgewählten Kohlendioxidemissionssteuerparameter umfassen, und
Bestimmen (S3) einer Zeitvorgabe, gemäß der der mindestens eine Verbraucher (L) für eine Zeitdauer basierend auf den Anwenderauswahldaten und auf Kohlendioxidemissionsdaten, die die erwartete Kohlendioxidemission während der Zeitdauer betreffen, arbeiten darf.

2. Verfahren nach Anspruch 1, das ein Empfangen der Kohlendioxidemissionsdaten für die Zeitdauer von einem Dienstanbieter vor dem Bestimmen der Zeitvorgabe umfasst.

3. Verfahren nach Anspruch 1 oder 2, wobei jeder Kohlendioxidemissionssteuerparameter eine Kohlendioxidemissionsstufe (C1, C2, C3, C4) ist.

4. Verfahren nach Anspruch 3, das vor dem Bereitstellen der Kohlendioxidemissionssteuerparameter ein Erzeugen (S0) der Kohlendioxidemissionsstufen umfasst.

5. Verfahren nach einem der vorhergehenden Ansprüche, das ein Bereitstellen (S1) der Energiekostenstufendaten mehrerer Energiekostenstufen, die auf Energiekostenstatistiken basieren, umfasst.

6. Verfahren nach Anspruch 5, das das Empfangen (S2) von Anwenderauswahldaten umfasst, in denen der mindestens eine Verbraucher mindestens einer der mehreren Energiekostenstufen zugeordnet ist, wobei die Anwenderauswahldaten eine vom Anwender ausgewählte Einschränkung einer Stufe der Wichtigkeit des Beschränkens des Betriebs des mindestens einen Verbrauchers auf die mindestens eine ausgewählte Energiekostenstufe umfassen.

7. Verfahren nach Anspruch 6, wobei das Bestimmen der Zeitvorgabe ferner auf Energiekostendaten, die die erwarteten Energiekosten während der Zeitdauer betreffen, basiert ist.

8. Verfahren nach Anspruch 7, das ein Empfangen der Energiekostendaten für die Zeitdauer von einem Dienstanbieter vor dem Bestimmen der Zeitvorgabe umfasst.

9. Verfahren nach einem der vorhergehenden Ansprüche, das ein Bereitstellen von Startzeitdaten für den mindestens einen Verbraucher basierend auf der Zeitvorgabe umfasst.

10. Computerprogrammprodukt, das computerausführbare Komponenten umfasst, um eine Vorrichtung dazu zu veranlassen, die in einem der Ansprüche 1-9 angegebenen Schritte auszuführen, wenn die computerausführbaren Komponenten auf einem Prozessor ausgeführt werden, der in der Vorrichtung enthalten ist.

11. Energiemanagementeinheit (1) für die Zeitvorgabe des Betriebs von mindestens einem Verbraucher (L) in einem Gebäudeautomatisierungssystem (9), wobei die Energiemanagementeinheit (1) Folgendes umfasst:
eine Ausgabeeinheit (5), die dazu ausgelegt ist, Kohlendioxidemissionssteuerparameter basierend auf Kohlendioxidemissionsstatistiken bereitzustellen,
eine Eingabeeinheit (3), die dazu ausgelegt ist, Anwenderauswahldaten zu empfangen, in denen der mindestens eine Verbraucher (L) mindestens einem der Kohlendioxidemissionssteuerparameter zugeordnet ist, wobei diese Anwenderauswahldaten mindestens eine vom Anwender ausgewählte Einschränkung einer Stufe der Wichtigkeit des Beschränkens des Betriebs des mindestens einen Verbrauchers (L) auf den mindestens einen ausgewählten Kohlendioxidemissionssteuerparameter umfassen, und
einen Prozessor (7), der dazu ausgelegt ist, eine Zeitvorgabe zu bestimmen, gemäß der der mindestens eine Verbraucher (L) für eine Zeitdauer basierend auf den Anwenderauswahldaten und auf Kohlendioxidemissionsdaten, die die erwartete Kohlendioxidemission während der Zeitdauer betreffen, arbeiten darf.

12. Energiemanagementeinheit (1) nach Anspruch 11, wobei jeder Kohlendioxidemissionssteuerparameter eine Kohlendioxidemissionsstufe (C1, C2, C3, C4) ist.

13. Energiemanagementeinheit (1) nach einem der Ansprüche 11-12, wobei die Ausgabeeinheit (5) dazu ausgelegt ist, Energiekostenstufendaten mehrerer Energiekostenstufen, die auf Energiekostenstatistiken basieren, bereitzustellen.

14. Energiemanagementeinheit (1) nach Anspruch 13, wobei die Eingabeeinheit (3) dazu ausgelegt ist, Anwenderauswahldaten zu empfangen, in denen der mindestens eine Verbraucher mindestens einer der mehreren Energiekostenstufen zugeordnet ist, wobei die Anwenderauswahldaten eine vom Anwender ausgewählte Einschränkung einer Stufe der Wichtigkeit des Beschränkens des Betriebs des mindestens einen Verbrauchers auf die mindestens eine ausgewählte Energiekostenstufe umfassen.

15. Energiemanagementeinheit (1) nach Anspruch 14, wobei der Prozessor (7) dazu ausgelegt ist, die Zeitvorgabe ferner basierend auf Energiekostendaten, die die erwarteten Energiekosten während der Zeitdauer betreffen, zu bestimmen.

16. Energiemanagementeinheit (1) nach einem der Ansprüche 11-15, wobei der Prozessor dazu ausgelegt ist, Startzeitdaten für den mindestens einen Verbraucher basierend auf der Zeitvorgabe bereitzustellen.

## Revendications

1. Procédé de planification du fonctionnement d'au moins une charge (L) dans un système d'immotique (9), le procédé comportant les étapes consistant à :
établir (S1) des paramètres de maîtrise des émissions de dioxyde de carbone sur la base de statistiques d'émissions de dioxyde de carbone,
recevoir (S2) des données de choix d'utilisateur dans lesquelles la ou les charges (L) sont associées à au moins un des paramètres de maîtrise des émissions de dioxyde de carbone, et lesdites données de choix d'utilisateur comportant une contrainte choisie par l'utilisateur sur un niveau d'importance de la limitation du fonctionnement de la ou des charges audit ou auxdits paramètres sélectionnés de maîtrise des émissions de dioxyde de carbone, et
déterminer (S3) un planning selon lequel la ou les charges (L) sont autorisées à fonctionner pendant une durée basée sur les données de choix d'utilisateur et sur des données d'émissions de dioxyde de carbone concernant une émission prévisionnelle de dioxyde de carbone pendant la durée en question.

2. Procédé selon la revendication 1, comportant l'étape consistant à recevoir les données d'émissions de dioxyde de carbone pour la durée en question de la part d'un prestataire de services avant de déterminer le planning.

3. Procédé selon la revendication 1 ou 2, chaque paramètre de maîtrise des émissions de dioxyde de carbone étant un niveau d'émissions de dioxyde de carbone (C1, C2, C3, C4).

4. Procédé selon la revendication 3, comportant l'étape consistant, avant d'établir les paramètres de maîtrise des émissions de dioxyde de carbone, à générer (S0) les niveaux d'émissions de dioxyde de carbone.

5. Procédé selon l'une quelconque des revendications précédentes, comportant l'étape consistant à établir (S1) des données de niveaux de coût énergétique d'une pluralité de niveaux de coût énergétique basés sur des statistiques de coût énergétique.

6. Procédé selon la revendication 5, comportant l'étape consistant à recevoir (S2) données de choix d'utilisateur dans lesquelles la ou les charges sont associées à au moins un niveau de la pluralité de niveaux de coût énergétique, et **caractérisé en ce que** lesdites données de choix d'utilisateur comportent une contrainte choisie par l'utilisateur sur un niveau d'importance de la limitation du fonctionnement de la ou des charges audit ou auxdits niveaux sélectionnés de coût énergétique.

7. Procédé selon la revendication 6, la détermination du planning étant en outre basée sur des données de coût énergétique concernant des coûts énergétiques prévisionnels pendant la durée en question.

8. Procédé selon la revendication 7, comportant l'étape consistant à recevoir les données de coût énergétique pour la durée en question de la part d'un prestataire de services avant de déterminer le planning.

9. Procédé selon l'une quelconque des revendications précédentes, comportant l'étape consistant à transmettre des données d'heure de démarrage à la ou aux charges sur la base du planning.

10. Produit de programme informatique comportant des composants exécutables sur ordinateur destinés à faire en sorte qu'un dispositif réalise les étapes énoncées dans l'une quelconque des revendications 1 à 9 lorsque les composants exécutables sur ordinateur sont exécutés sur un processeur compris dans le dispositif.

11. Unité (1) de gestion d'énergie destinée à planifier le fonctionnement d'au moins une charge (L) dans un système d'immotique (9), l'unité (1) de gestion d'énergie comportant :
une unité (5) de sortie agencée de façon à établir des paramètres de maîtrise des émissions de dioxyde de carbone sur la base de statistiques d'émissions de dioxyde de carbone,
une unité (3) d'entrée agencée de façon à recevoir des données de choix d'utilisateur dans lesquelles la ou les charges (L) sont associées à au moins un des paramètres de maîtrise des émissions de dioxyde de carbone, et lesdites données de choix d'utilisateur comportant une contrainte choisie par l'utilisateur sur un niveau d'importance de la limitation du fonctionnement de la ou des charges (L) audit ou auxdits paramètres sélectionnés de maîtrise du dioxyde de carbone, et
un processeur (7) agencé de façon à déterminer un planning selon lequel la ou les charges (L) sont autorisées à fonctionner pendant une durée basée sur les données de choix d'utilisateur et sur des données d'émissions de dioxyde de carbone concernant une émission prévisionnelle de dioxyde de carbone pendant la durée en question.

12. Unité (1) de gestion d'énergie selon la revendication 11, chaque paramètre de maîtrise des émissions de dioxyde de carbone étant un niveau d'émissions de dioxyde de carbone (C1, C2, C3, C4).

13. L'unité (1) de gestion d'énergie selon l'une quelconque des revendications 11 à 12, l'unité (5) de sortie étant agencée de façon à établir des données de niveaux de coût énergétique d'une pluralité de niveaux de coût énergétique basés sur des statistiques de coût énergétique.

14. Unité (1) de gestion d'énergie selon la revendication 13, l'unité (3) d'entrée étant agencée de façon à recevoir des données de choix d'utilisateur dans lesquelles la ou les charges sont associées à au moins un niveau de la pluralité de niveaux de coût énergétique, et lesdites données de choix d'utilisateur comportant une contrainte choisie par l'utilisateur sur un niveau d'importance de la limitation du fonctionnement de la ou des charges audit ou auxdits niveaux sélectionnés de coût énergétique.

15. Unité (1) de gestion d'énergie selon la revendication 14, le processeur (7) étant agencé de façon à déterminer le planning en se basant en outre sur des données de coût énergétique concernant des coûts énergétiques prévisionnels pendant la durée en question.

16. Unité (1) de gestion d'énergie selon l'une quelconque des revendications 11 à 15, le processeur étant agencé de façon à transmettre des données d'heure de démarrage à la ou aux charges sur la base du planning.
